Europäisches Patentamt

European Patent Office

Office européen des brevets

(11) Publication number: **0 190 506**
**B1**

# EUROPEAN PATENT SPECIFICATION

(45) Date of publication of patent specification: **05.10.88**

(21) Application number: **85309291.4**

(22) Date of filing: **19.12.85**

(51) Int. Cl.⁴: **B 65 G 13/071**

(54) Conveyor with friction roll drive.

(30) Priority: **10.01.85 GB 8500592**

(43) Date of publication of application:
**13.08.86 Bulletin 86/33**

(45) Publication of the grant of the patent:
**05.10.88 Bulletin 88/40**

(84) Designated Contracting States:
**BE DE FR GB IT NL SE**

(56) References cited:
**DE-A-3 148 176**
**GB-A-1 561 373**

(73) Proprietor: **Sponmech Limited**
**Bromley Street Lye**
**Stourbridge West Midlands DY9 8HU (GB)**

(72) Inventor: **Potter, Michael Stewart**
**9 High House Drive**
**Rednal Birmingham B45 8ET (GB)**

(74) Representative: **Cuddon, George Desmond et al**
**MARKS & CLERK Alpha Tower Suffolk Street**
**Queensway**
**Birmingham B1 1TT (GB)**

Courier Press, Leamington Spa, England.

## Description

This invention relates to power and free roller conveyors, that is to conveyors whose rollers frictionally engage an input drive so that the rollers do not rotate when articles carried thereby are prevented from moving along the conveyor.

It is known to provide power and free roller conveyors, that is conveyors in which the torque input to each of a plurality of driven rollers is individually adjustable, so that the rollers are not rotated if an article carried thereon is arrested. Such conveyors are commonly used in large-scale manufacturing processes and it is therefore desirable that they should operate for long periods with a minimum of maintenance or adjustment, since these latter can be extremely costly in terms of lost production.

DE—A—3148176 discloses a power and free conveyor having a plurality of rollers which are rotatable by an input drive shaft which extends perpendicularly of the roller axes. Drive between the input shaft and the rollers is by way of friction drive arrangements each of which has frictionally interengaged drive and driven wheels mounted on the roller and on the shaft respectively. A first one of the wheels is fixed for non-slipping rotation with the part on which it is mounted. The other of the wheels is biased into frictional engagement with the first wheel by an adjustable spring device by means of which the torque transmitted to the roller is movable. As described in the above reference the axially movable wheel is mounted on the input drive shaft.

It is a disadvantage of the prior art arrangement that the axially movable wheel is also freely rotatable relative to its shaft, and that drive between the shaft and the wheel is transmitted, inter alia, by torsion in the spring device. The spring characteristics will necessarily alter as the torsion varies, and will thus affect frictional engagement between the wheels. The ends of the spring device are also rotatable relative to the shaft and the friction wheel respectively. Furthermore in the prior art the spring coacts with the friction wheel by way of a ring which is rotatable with respect to the spring and the friction wheel. The prior art thus has three friction engagements in addition to that between the friction wheels, and additionally relies on torsion in the spring. The drive torque applied to each roller is thus dependent on five variables which may alter during use.

It is an object of the invention to provide a power and free roller conveyor having improved performance and reliability, by arranging that torque applied to each roller is dependent on only one variable which may alter in use, namely the friction coefficient between the wheels in each drive arrangement.

According to the invention there is provided a power and free roller conveyor in which drive to a plurality of rollers from a drive shaft which extends perpendicular to the roller axes is by way of friction drive arrangements, each comprising frictionally interengaged wheels mounted on the input shaft and roller respectively, and a biasing device urging one of the wheels into engagement with the other wheel, the force applied by the biasing device being variable, the wheel acted on by the biasing device having limited axial travel on the part on which it is mounted, and the other wheel being secured for non-slipping rotation with the part on which it is mounted, characterised by the wheel acted on by the biasing device also having non-slipping rotation with the part on which it is mounted, so that the torque transmitted between the drive shaft and the roller is dependent only on the friction coefficient between the wheels and the force applied by the biasing device.

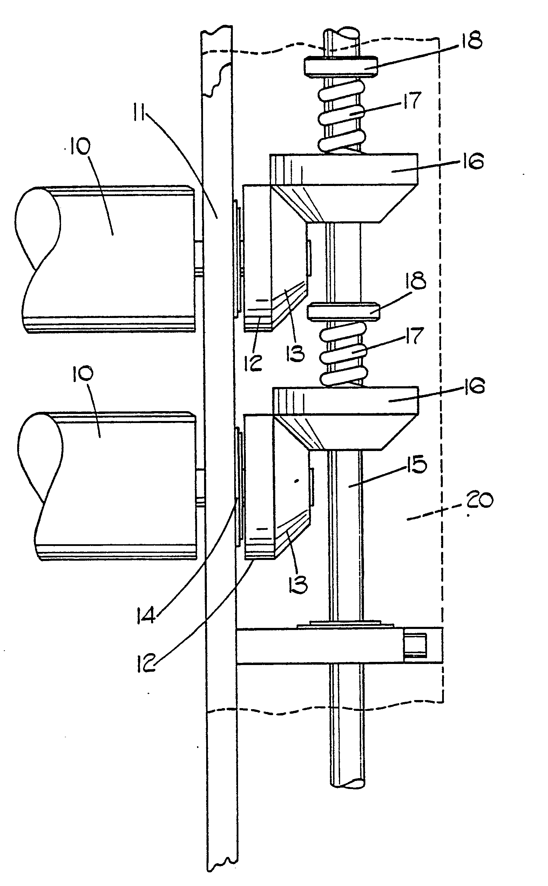

An embodiment of the invention will now be described by way of example only and with reference to the accompanying drawing which is a plan view of part of a roller conveyor.

A plurality of rollers 10 are mounted for free rotation between side rails 11, only one of which is shown. Each roller 10 has fixedly secured thereto a transmission device in the form of a friction wheel 12 having a frusto-conical surface 13 with a 90° included angle. The rollers 10 and wheels 12 are mounted in suitable bearings 14 for free rotation in the side rails 11. An input drive shaft 15 extends parallel to the rail 11 adjacent the wheels 12. A plurality of drive elements in the form of further friction wheels 16 are splined or keyed to the shaft 15 for rotation therewith and limited axial movement relative thereto. The wheels 16 also have frusto-conical surfaces with 90° included angles which are biased into engagement with the surfaces 13 by springs 17. The bias of the springs 17 may be varied by means of axially adjustable collars 18 on the shaft 15 so that the torque applied by the shaft 15 to each of the rollers 10 may be altered as required.

Preferably the wheels 12 are of steel and the wheels 16 of a suitable plastics material, so that if the rollers 10 are arrested while the shaft 15 continues to rotate, substantially no wear will take place on the wheels 12, but the frusto-conical surfaces of the wheels 16 will tend to wear evenly over their whole area. Preferably also the wheels 12, 16 and shaft 15 are surrounded by a suitable, readily removable housing, indicated at 20, supported on the rail 11. Foreign matter is thus kept from the wheels 12, 15 which may, in any case, readily be cleaned without dismantling the conveyor, or moving articles which may be resting on the rollers.

The arrangement described provides an effective power and free conveyor without the elaborate measures hitherto considered necessary to prevent rollers from continuing to rotate even when articles supported thereon have been arrested. Additionally the preferred use of frusto-conical friction wheels avoids the requirement for helical gears which are commonly used to transmit drive in known power and free conveyors. Axial movement of the wheels 16 also enables smaller diameter wheels 12 to be fitted in loca-

tions where it is desired to speed up movement of transported articles, for example immediately following a stop or abutment so that articles released from the stop may be spaced apart without the need for escapement mechanisms in the stop. In known power and free roller conveyors the drives to selected rollers in one assembly cannot readily be adjusted so as to transport articles satisfactorily up a significant incline or to reduce driving torque to selected rollers adjacent a stop for the transported articles. In the present invention the bias provided by the spring 17 may readily be adjusted at required locations in a conveyor system to effect up-hill movement.

**Claims**

1. A power and free roller conveyor including a support (11), a plurality of roller elements (10) mounted on said support (11), an input drive shaft (15) extending substantially perpendicularly of the axes of said roller elements (10), and a plurality of friction drive arrangements between said shaft (15) and respective ones of said roller elements (10), each of said friction drive arrangements comprising first and second frictionally interengaged drive and driven wheels (12, 16) mounted on a roller element (10) and on said drive shaft (15) respectively, and a biasing device (17) urging one of said wheels (16) into engagement with the other wheel (12), and means (18) for varying the force applied by said biasing device (17), said one wheel (16) having limited axial travel with respect to the part (15) on which it is mounted and the other wheel (12) being secured for non-slipping rotation with the part (10) on which it is mounted, characterised in that said one wheel (16) has non-slipping rotation with the part (15) on which it is mounted, thereby the torque transmitted between said shaft (15) and said roller elements (10) is dependent only on the friction coefficient between said wheels (12, 16) and on the force applied by said biassing device (17).

2. A power and free roller conveyor as claimed in Claim 1 in which said one wheel (16) is mounted on said input drive shaft (15).

3. A power and free roller conveyor as claimed in Claim 1 or Claim 2 in which said wheels (12, 16) have mutually engaged frusto-conical surfaces.

4. A power and free roller conveyor as claimed in any preceding claim in which said friction drive wheels (12, 16) lie on an opposite side of said support (11) from that one which said roller elements (10) are located.

**Patentansprüche**

1. Power- und Free-Rollenförderer mit einer Halterung (11), einer Mehrzahl an der Halterung (11) angeordneten Rollen (10), einer Antriebswelle (15), die im wesentlichen senkrecht zu den Achsen der Rollen (10) verläuft, und einer Mehrzahl Reibantriebsvorrichtungen zwischen der Welle (15) und jeweiligen Rollen (10), wobei jede Reibantriebsvorrichtung ein treibendes und ein angetriebenes Rad (12, 16), die miteinander in Reibeingriff stehen und an einer Rolle (10) bzw. an der Antriebswelle (15) befestigt sind, sowie ein Vorspannelement (17), das eines der Räder (16) in Eingriff mit dem anderen Rad (12) beaufschlagt, und ein Element (18) zum Ändern der von dem Vorspannelement (17) ausgeübten Kraft umfaßt, wobei das eine Rad (16) in bezug auf das Teil (15), an dem es montiert ist, begrenzt axialbeweglich ist und das andere Rad (12) schlupffrei drehbar mit dem Teil (10), an dem es montiert ist, gesichert ist, dadurch gekennzeichnet, daß das eine Rad (16) mit dem Teil (15), an dem es montiert ist, schlupffrei drehbar ist, so daß das zwischen der Welle (15) und den Rollen (10) übertragene Drehmoment nur vom Reibbeiwert zwischen den Rädern (12, 16) und der vom Vorspannelement (17) ausgeübten Kraft abhängig ist.

2. Power- und Free-Rollenförderer nach Anspruch 1, wobei das eine Rad (16) auf der Antriebswelle (15) montiert ist.

3. Power- und Free-Rollenförderer nach Anspruch 1 oder 2, wobei die Räder (12, 16) in gegenseitiger Anlage befindliche Kegelstumpfflächen haben.

4. Power- und Free-Rollenförderer nach einem der vorhergehenden Ansprüche, wobei die Reibantriebsräder (12, 16) auf einer Seite der Halterung (11) liegen, die der Seite entgegengesetzt ist, an der die Rollen (10) angeordnet sind.

**Revendications**

1. Transporteur à rouleaux motorisés et libres, comportant un support (11), une pluralité d'éléments formant rouleaux (10) montés sur ledit support (11), un arbre d'entrainement d'entrée (15) qui s'étend sensiblement perpendiculairement aux axes desdits éléments formant rouleaux (10), et une pluralité de dispositifs d'entrainement par friction entre ledit arbre (15) et chacun, respectif, desdits éléments formant rouleaux (10), chacun desdits dispositifs d'entrainement par friction comprenant une première roue d'entrainement et une seconde roue entrainée (12, 16), venant mutuellement en prise par friction, montées, respectivement, sur un élément formant rouleau (10) et sur ledit arbre d'entrainement (15), ainsi qu'un dispositif de contrainte (17) qui pousse la première desdites roues (16) à venir en prise avec l'autre roue (12), et des moyens (18) pour faire varier la force appliquée par ledit dispositif de contrainte (17), ladite première roue (16) ayant une course axiale limitée par rapport à la pièce (15) sur laquelle elle est montée et l'autre roue (12) étant fixée pour être entrainée en rotation, sans glissement, avec la pièce (10) sur laquelle elle est montée, caractérisé en ce que ladite première roue (16) est entrainée en rotation, sans glissement, avec la pièce (15) sur laquelle elle est montée, ce par quoi le couple transmis entre ledit arbre (15) et lesdits éléments formant rouleaux (10) ne dépend que du coefficient de friction entre lesdites roues (12, 16) et de la force appliquée par ledit dispositif de contrainte (17).

2. Transporteur à rouleaux motorisés et libres, selon la revendication 1, dans lequel ladite première roue (16) est montée sur ledit arbre d'entrainement d'entrée (15).

3. Transporteur à rouleaux motorisés et libres, selon la revendication 1 ou la revendication 2, dans lequel lesdites roues (12, 16) présentent des surfaces tronconiques, venant mutuellement en prise.

4. Transporteur à rouleaux motorisés et libres, selon l'une quelconque des revendications précédentes, dans lequel lesdites roues d'entrainement par friction (12, 16) se trouvent du côté dudit support (11) opposé à celui où se trouvent lesdits éléments formant rouleaux (10).